# EUROPÄISCHE PATENTSCHRIFT

(11) **EP 1 507 445 B1**
(45) Veröffentlichungstag und Bekanntmachung des Hinweises auf die Patenterteilung: **22.11.2006**
(21) Anmeldenummer: 04016504.5
(22) Anmeldetag: 13.07.2004
(51) Int. Cl.: H05B 41/28

(54) **Elektronisches Vorschaltgerät für eine mit iterativen Spannungspulsen zu betreibende Lampe**
Electronic ballast for operating a lamp with iterative voltage pulses
Ballast electronique pour faire fonctionner une lamp avec des impulsions de tension itérative

(30) Priorität: 11.08.2003 DE 10336858
(43) Veröffentlichungstag der Anmeldung: 16.02.2005
(73) Patentinhaber: Patent-Treuhand-Gesellschaft für elektrische Glühlampen mbH, 81543 München (DE)
(72) Erfinder: Lecheler, Reinhard, 86633 Neuburg/Donau (DE); Schallmoser, Oskar, 85521 Ottobrunn (DE)

(56) Entgegenhaltungen:
- EP-A- 0 671 869
- US-A- 3 059 143
- US-A1- 2002 158 589

## Beschreibung

### Technisches Gebiet

Die vorliegende Erfindung betrifft ein elektronisches Vorschaltgerät für eine Lampe, und zwar insbesondere für eine für dielektrisch behinderte Entladungen ausgelegte (sog. "stille") Entladungslampe.

### Stand der Technik

Solche Entladungslampen sind an sich bekannt. Sie müssen durch ein elektronisches Vorschaltgerät betrieben werden, das iterativ Hochspannungspulse an die Entladungslampe anlegen kann. Die Erfindung richtet sich jedoch auch auf Vorschaltgeräte für andere Lampentypen, die mit iterativ erzeugten Spannungspulsen betrieben werden können, und zwar besonders auf solche Lampen oder solchermaßen verschaltete Lampen, bei denen eine kapazitive Charakteristik wie bei dielektrisch behinderten Entladungen vorherrscht.

Es ist ferner an sich bekannt, in Vorschaltgeräten zur Erzeugung von Hochspannungspulsen Induktivitäten einzusetzen und durch verschiedene Wandlerkonzepte, etwa sog. Flusswandler oder Sperrwandler, die gewünschten Spannungspulse zu erzeugen. Bei der Induktivität kann es sich dabei um eine einfache Drossel mit Abgriffen für einen Versorgungskreis und für einen die Lampe enthaltenden Lampenkreis oder auch um einen sog. Spartransformator oder, hier bevorzugt, um einen Trenntransformator handeln. Der Versorgungskreis beaufschlagt die Induktivität mit Strom und ist dabei vorzugsweise durch einen hier als ersten Schalter bezeichneten Schalter (im Falle eines Transformators Primärkreisschalter) schaltbar.

### Darstellung der Erfindung

Der Erfindung liegt das technische Problem zugrunde, dieses allgemeine Konzept eines Vorschaltgeräts weiterzuentwickeln.

Erfindungsgemäß ist hierzu eine über einen steuerbaren zweiten Schalter niederohmig kurzschließbare zweite Wicklung zur Erzeugung einer Betriebsphase des Vorschaltgeräts vorgesehen, in der die zweite Wicklung niederohmig kurzgeschlossen ist.

Die Erfindung richtet sich zudem auf ein Verfahren nach Anspruch 18 sowie ein Beleuchtungssystem nach Anspruch 19.

Bevorzugte Ausführungsformen der Erfindung sind im Übrigen in den abhängigen Ansprüchen angegeben.

Die Erfindung zeichnet sich also durch die Möglichkeit des Kurzschlusses einer Wicklung der Induktivität aus. Dieser Kurzschluss hat in der Realität natürlich einen gewissen von Null verschiedenen ohmschen Widerstand, soll aber im Vergleich zu den übrigen Impedanzen niederohmig sein, um die im Folgenden näher erläuterte Wirkung ausfüllen zu können. Der niederohmige Kurzschluss der Wicklung verhindert bzw. begrenzt eine Induktionsspannung an dieser Wicklung auf einen sehr kleinen Wert. Damit ergibt sich, dass der die zweite Wicklung durchsetzende magnetische Fluss im Wesentlichen zeitkonstant, also im Verhältnis zu anderen beteiligten Zeitverläufen nur sehr langsam zeitveränderlich ist. Anschaulich gesprochen kann bei dem erfindungsgemäßen Vorschaltgerät der die zweite Wicklung durchsetzende Fluss also "eingefroren" werden. Die zweite Wicklung kann dabei übrigens auch ein Teil der ersten Wicklung sein oder umgekehrt, sich also durch einen oder die Abgriffe von der ersten Wicklung unterscheiden. Es kann sich aber auch um eine eigentliche zweite Wicklung handeln.

Damit ergibt sich für den Entwickler und den Betrieb des Vorschaltgeräts ein neuer Freiheitsgrad, der in verschiedenster Weise erfindungsgemäß genutzt werden kann.

Beispielsweise kann die genannte Betriebsphase zur Triggerung des Betriebs des Vorschaltgeräts durch ein externes Signal genutzt werden. Dieser Aspekt wird in einer Parallelanmeldung näher ausgeführt. Dabei kann das Triggersignal etwa als Schlusszeitpunkt der genannten Betriebsphase verwendet werden. Dieser Aspekt der Erfindung wird in der zeitgleich eingereichten Parallelanmeldung derselben Anmelderin näher erläutert.

Andererseits ist es möglich, durch das Einfrieren des magnetischen Flusses durch die zweite Wicklung magnetische Reaktionen des Kerns (jedenfalls in Bezug auf die Magnetisierungsinduktivität der zweiten Wicklung), wenn gewünscht, weitgehend zu unterbinden. Damit bleiben während des Kurzschlusses allein die bei realen Induktivitäten vorliegenden Streuinduktivitäten maßgeblich.

Insbesondere ist es möglich, die vor allem bei für dielektrisch behinderte Entladungen ausgelegten Entladungslampen wesentlichen kapazitiven Aufladungen der Lampe durch den erwähnten Spannungspuls nach der Zündung zu entladen, wobei die zweite Wicklung kurzgeschlossen sein soll. Dies hat nämlich zur Folge, dass die Entladung der kapazitiven Aufladung der Lampe lediglich durch die Streuinduktivität (vom Lampenkreis gesehen Richtung Primärseite) gebremst ist und im Übrigen eine Übertragung zwischen dem Lampenkreis und dem Primärkreis (wobei der Begriff Primärkreis nicht notwendigerweise einen eigentlichen Transformator voraussetzt) durch den eigentlichen Übertrager der Induktivität erfolgt, also im Sinne eines Ersatzschaltbildes durch die durch die Induktivität bewirkte Spannungs- und Stromübersetzung ohne Magnetisierungsinduktivität. Dadurch ist es möglich, die Magnetisierungsflüsse durch den Kern der Induktivität klein zu halten, womit der Kern und daher die Induktivität als Bauteil klein ausgelegt werden kann.

Bei dieser Erfindung sind insbesondere Transformatoren, vorzugsweise Trenntransformatoren (wobei die "zweite Wicklung" als Teil einer von dessen beiden Wicklungen oder separat ausgeführt sein kann) einzusetzen. Wenn als Spannungs-Zeit-Integrale bzw. für die Magnetisierungsflüsse in dem Transformatorenkern relativ kleine Werte erreicht werden, weil ausreichend schnell eine Entladung der Lampe stattfindet und damit keine für die eigentliche Lichterzeugung insbesondere in dielektrisch behinderten Entladungen unnötige weitere Spannung an dem Transformator anliegt, so lassen sich in erfindungsgemäßen Vorschaltgeräten also besonders kleine Transformatoren verbauen. Dies hat neben Kostenvorteilen vor allen Dingen wesentliche Vorteile für die Baugröße und das Gewicht des Geräts, die wesentlich durch den Transformator bestimmt wird.

Das "Ausschalten" der Magnetisierungsinduktivität des Transformators (bzw. - allgemeiner gesprochen - der erfindungsgemäßen Induktivität, wobei hierzwischen im Folgenden ohne Einschränkung nicht mehr unterschieden wird) ermöglicht nämlich eine schaltungstechnische Reduzierung der wirksamen Induktivität des Transformators bei dem Entladungsvorgang und damit eine entsprechende Verkürzung der wirksamen Zeitkonstante bzw. Erhöhung der effektiven Eigenfrequenz des Lampenkreises.

Insbesondere ist bei dieser Erfindung das Flusswandlerkonzept bevorzugt, bei dem in die Induktivität, d. h. in die erste Wicklung, ein Strom eingespeist wird, der zeitgleich im Lampenkreis eine Induktionsspannung aufbaut (in einer "dritten" Wicklung, die keine eigenständige dritte Wicklung sein muss, sondern sich auch nur durch ihre Abgriffe von der ersten bzw. zweiten Wicklung unterscheiden kann). Solche Flusswandler sind vor allem bei mittleren und größeren Lampenleistungen bei kapazitiver Charakteristik konventionellerweise mit signifikanten Schaltverlusten in dem die erste Wicklung beaufschlagenden Stromkreis verbunden. Erfindungsgemäß kann jedoch der durch die erste Wicklung fließende Strom bei geschlossenem Kurzschlussschalter durch die zweite Wicklung "übernommen" werden, so dass sich an einem "ersten" Schalter in dem Primärkreis keine wesentliche Induktionsspannung aufbauen kann. Das erfindungsgemäße Konzept erlaubt also ein weitgehend verlustfreies Schalten im Primärkreis.

Der erste Schalter wird vorzugsweise, jedoch nicht notwendigerweise, etwa beim Nulldurchgang der Lampenspannung eingeschaltet und ebenfalls vorzugsweise nach einem Umschwingvorgang, also einem Vorzeichenwechsel des Stroms durch den ersten Schalter im darauf folgenden Nulldurchgang wieder geöffnet. Der Kurzschlussschalter wiederum wird vorzugsweise etwa beim Maximum der Lampenspannung wiederum nach einem Umschwingen derselben, also einem Vorzeichenwechsel, eingeschaltet und ebenfalls vorzugsweise etwa beim Nulldurchgang des Stroms durch die zweite Wicklung und den Kurzschlussschalter wieder geöffnet. Zur Veranschaulichung wird auf das Ausführungsbeispiel verwiesen.

Der erfindungsgemäße schnelle Abbau der kapazitiven Aufladung der Lampe kann vorzugsweise eine innere Rückzündung in Folge der inneren Gegenpolarisation der Lampe, die ihrerseits eine neue Zündspannung bewirken kann, hervorrufen. Hierzu wird verwiesen auf die frühere Anmeldung EP 99 953 611 derselben Anmelderin.

Diese Rückzündung kann auf eine "Hinzündung", also eine durch den eigentlichen Flusswandlerpuls zurückgehende Zündung folgen, weil der Sekundärkreis entsprechend schnell zurückschwingt. Es ist jedoch auch möglich, die zweite Wicklung etwas zeitverzögert kurzzuschließen. Dabei könnte u. U. zunächst auf die "Hinzündung" eine erste Rückzündung folgen, die durch das Abfließen der äußeren Ladung an der Entladungslampe und damit Wirksamwerden der inneren Gegenpolarisation bedingt ist. Wenn dann der Kurzschluss der zweiten Wicklung hergestellt wird, wird die Eigenfrequenz des Sekundärkreises plötzlich deutlich erhöht, so dass es zu einem (weiteren) heftigen Schwingvorgang kommen kann, der eine (weitere) Rückzündung bewirkt. Mit dem Kurzschluss der zweiten Wicklung kann also auch eine Rückzündung getriggert werden. Auch bei dieser Variante wird der Transformator nach dieser "getriggerten" Rückzündung effektiv und schnell entmagnetisiert, so dass die Ziele der Erfindung erreicht werden.

Es ist jedoch insgesamt bevorzugt, nach der Hinzündung nicht zu viele weitere Zündungen (die demselben Flusswandlerpuls zuzuordnen sind) zuzulassen, weil es für die Effizienz der Lichterzeugung bei dielektrisch behinderten Entladungslampen vorteilhaft ist, nach einer Zündung bzw. im vorliegenden Fall Rückzündung eine gewisse "Totzeit" bis zum nächsten Zündvorgang ablaufen zu lassen. Daher wird vorzugsweise der Kurzschlussschalter nach der "getriggerten" Rückzündung wieder geöffnet, um eine weitere Zündung zu verhindern.

Schließlich ist es auch möglich, dass der zeitliche Abstand zwischen dem Schließen des Kurzschlussschalters und der letzten vorhergehenden Zündung, also der Hinzündung oder einer darauf folgenden spontanen Rückzündung, so groß wird, dass er als Totzeit im Sinne der Pulsbetriebsweise dielektrisch behinderter Entladungslampen gewertet werden kann.

Der Kurzschlussschalter kann über eine zu einer parasitären Transistordiode (Body-Diode eines MOSFET) entgegengesetzt gepolte Diode des Kurzschlussschalters an die zweite Wicklung angeschlossen, d. h. parallel zu ihr geschaltet sein. Diese Diode verhindert ungewünschte Einflüsse der Body-Diode über die zweite Wicklung. Es kann jedoch auch eine Diodenbrücke verwendet werden, die es ermöglicht, dass der Kurzschlussschalter in Phasen beider Polaritäten eingesetzt wird. Ferner ist es möglich, statt der Diodenbrücke die zweite Wicklung über einen jeweiligen Schalter an beiden ihrer Anschlüsse über ein Bezugspotential kurzzuschließen, etwa an Masse zu schließen. Zwar erfordert diese Ausführungsform statt einem Kurzschlussschalter zwei Kurzschlussschalter. Andererseits können diese Kurzschlussschalter im Gegensatz zu der zuvor erwähnten Ausführungsform mit einer Diodenbrücke über ein zeitlich konstantes und definiertes Bezugspotential angesteuert werden. Im Fall der Diodenbrücke schwankt das Bezugspotential der Steuerelektrode (beispielsweise des Gates) des Kurzschlussschalters je nach Polarität, also je nach dem ob an Source oder an Drain bzw. an Emitter oder Kollektor des Kurzschlussschalters die positive bzw. die negative Polarität anliegt.

Die zweite Wicklung, die eine eigenständige Wicklung oder nur ein weiterer Abgriff an der Induktivität, insbesondere dem Transformator sein kann, ist vorzugsweise so ausgelegt, dass an dem Kurzschlussschalter maximale Sperrspannungen von etwa 500 - 800 V maximal auftreten. Einerseits sollte die zweite Wicklung keine zu geringen Spannungen an dem Kurzschlussschalter erzeugen, weil dies umgekehrt relativ große Induktionsströme in dem betreffenden Kurzschlusskreis zur Folge hätte. Diese Kurzschiussströme wären mit unerwünschten ohmschen Verlusten verbunden. Andererseits ist es erwünscht, die Spannungen an dem Kurzschlussschalter nicht zu groß werden zu lassen, um nicht zu teuere Transistoren verwenden zu müssen. Der erwähnte Bereich zwischen 500 - 800 V hat sich als günstiger Kompromiss herausgestellt.

Es wurde bereits erwähnt, dass die Erfindung eine geringe Kernaussteuerung in der Induktivität bzw. dem Transformator erlaubt und insbesondere den Einsatz kleiner Induktivitäten bzw. Transformatoren gestattet. Dabei ist bevorzugt, den Kern nicht in die Sättigung zu treiben. Insbesondere ist es bevorzugt, die Aussteuerung des Kerns möglichst unterhalb von 100 mT zu halten. Zwar kann es auch bewusst erwünscht sein, eine Kernsättigung zu erzeugen, um die dadurch hervorgerufene Verminderung der Induktivität auszunutzen, jedoch schafft dies eine Abhängigkeit von individuellen Parametern der verwendeten Induktivität und auch von Betriebsbedingungen, insbesondere der Temperatur, die im Rahmen dieser Erfindung nicht gewünscht ist. Stattdessen soll sich das erfindungsgemäße Vorschaltgerät möglichst weitgehend durch die Ansteuerung des oder der verwendeten Schalter/s auslegen lassen und im Übrigen möglichst universell auch für verschiedene Anwendungsfälle auszulegen sein.

Bevorzugt ist ferner ein bipolares Vorschaltgerät, also eine Auslegung für Spannungspulse alternierender Polarität im Lampenkreis. Dadurch ist es möglich, eine über die Zeit erfolgende Aufintegration von Restmagnetisierungen in der Induktivität bzw. deren Kern durch unvollständige Entmagnetisierung in einem einzelnen Arbeitszyklus zu vermeiden und in einem "Steady State-Zustand" des bipolaren Betriebs eine mittlere Nullmagnetisierung zu erzielen.

Im Rahmen der vorstehend erwähnten Ansteuerung des oder der Schalter/s zur Anpassung an den individuellen Anwendungsfall kommt insbesondere eine Mikrocontrollersteuerung des Kurzschlussschalters und ggf. auch des Primärkreisschalters in Betracht. Bei der Auslegung eines solchen Vorschaltgeräts auf einen bestimmten Lampentyp ist es im günstigsten Fall möglich, lediglich die Software des Mikrocontrollers anzupassen und im Übrigen eine "hardwaretechnisch" identische Schaltung für verschiedene Lampentypen einzusetzen.

Schließlich zeigt die Erfindung ihre Vorteile gerade im Zusammenhang mit einer dielektrisch behinderten Entladungslampe und richtet sich daher auch auf ein Beleuchtungssystem aus einer solchen Lampe und einem Vorschaltgerät gemäß der vorstehenden Beschreibung. Die bereits erwähnte Streuinduktivität (aus der Sicht des Lampenkreises) sollte bei einem solchen Beleuchtungssystem vorzugsweise so ausgelegt sein, dass sich aus der Streuinduktivität und der Kapazität der verwendeten Lampe eine Periodendauer von mindestens 0,4 µs, vorzugsweise mindestens 1 µs, und höchstens 10 µs, vorzugsweise höchstens 5 µs, ergibt.

### Kurze Beschreibung der Zeichnungen

Im Folgenden wird ein bevorzugtes Ausführungsbeispiel der Erfindung erläutert, wobei die dabei dargestellten Merkmale auch in anderen Kombinationen erfindungswesentlich sein können und sich im Übrigen sowohl auf das erfindungsgemäße Vorschaltgerät und Beleuchtungssystem, also die Vorrichtungskategorie, also auch auf die Verfahrenskategorie der Erfindung beziehen.
- Fig. 1: zeigt ein schematisches Schaltdiagramm eines erfindungsgemäßen elektronischen Vorschaltgeräts und Beleuchtungssystems.
- Fig. 2: zeigt ein schematisches Zeitverlaufsdiagramm von Steuersignalen der Schaltung aus Fig. 1.
- Fig. 3: zeigt Zeitverlaufsdiagramme verschiedener elektrischer Größen der Schaltung aus Fig. 1 als Messaufzeichnungen unter Bezugnahme auf Fig. 2.
- Fig. 4a: zeigt einen Ausschnitt aus Fig. 3 zur Erläuterung eines Erfindungsaspekts.
- Fig. 4b: zeigt einen anderen Ausschnitt aus Fig. 3 zur Erläuterung eines Erfindungsaspekts.
- Fig. 5: zeigt ein zweites Ausführungsbeispiel als Alternative zu Fig. 1.
- Fig. 6: zeigt ein drittes Ausführungsbeispiel als Alternative zu Fig. 1.
- Fig. 7: zeigt ein viertes Ausführungsbeispiel als Alternative zu Fig. 1.

### Bevorzugte Ausführung der Erfindung

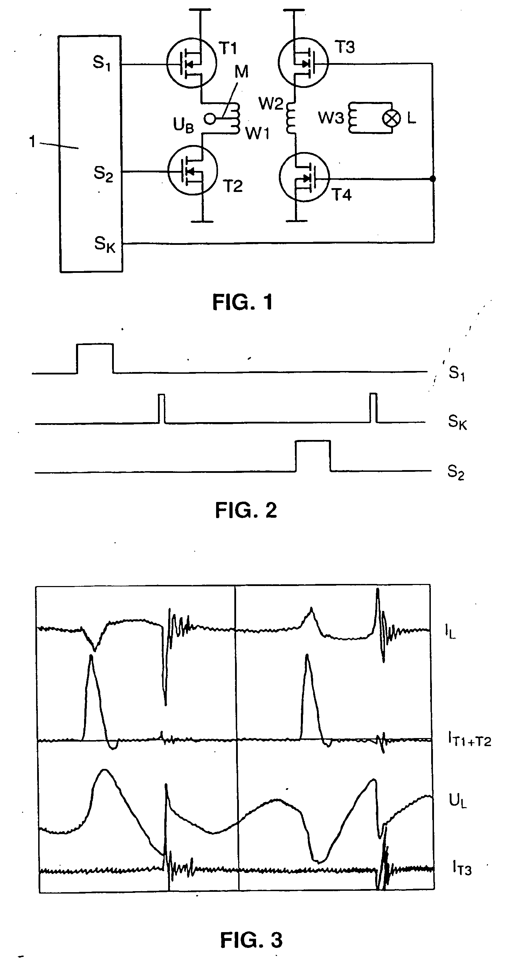

In Fig. 1 ist mit 1 eine elektronische Steuerung mit drei Ausgängen S₁, S₂ und S_{K} bezeichnet. Konkret handelt es sich bei der Steuerung 1 um einen Mikrocontroler. Ein Trenntransformator weist drei Wicklungen W1, W2 und W3 auf, die im Sinn der bisherigen Beschreibung die erste, zweite bzw. dritte Wicklung sind. Die dritte Wicklung ist demzufolge in den Lampenkreis geschaltet, also mit einer dielektrisch behinderten Entladungslampe L verbunden. Die erste Wicklung W1 ist an ihren beiden Enden jeweils über einen Schalttransistor T1 bzw. T2 mit Masse und über einen Mittenabgriff M mit einem Versorgungspotential U_{B} verbunden. Die erste Wicklung W1 kann damit in bezüglich der Polarität alternierender Weise mit Spannung beaufschlagt werden und nach dem Flusswandlerprinzip Induktionspulse alternierender Polarität der dritten Wicklung W3 induzieren. Dabei können die beiden Schalttransistoren T1 und T2 mit Potentialbezug zu Masse über die Steuereingänge S₁ und S₂ angesteuert werden.

Die zweite oder Kurzschlusswicklung W2 ist ihrerseits an beiden Enden über zwei Schalttransistoren T3 und T4 jeweils mit Masse verbunden. Die beiden Schalttransistoren T3 und T4 werden von demselben Steuerausgang S_{K} der elektronischen Steuerung 1 angesteuert. Damit ist die Kurzschlusswicklung W2 an ihren beiden Enden abhängig von der Ansteuerung über S_{K} kurzgeschlossen oder offen.

Das elektronische Vorschaltgerät mit der in Fig. 1 schematisch dargestellten Schaltung kann somit über den Trenntransformator W1, W2, W3 die Entladungslampe L in an sich bekannter Weise mit Spannungspulsen beaufschlagen und nach einem ebenfalls an sich bekannten gepulsten Betriebsverfahren zum Leuchten bringen. Dabei ergeben sich für die Ansteuerung der Schalttransistoren T1 und T2 die in Fig. 2 schematisch dargestellten Zeitverläufe der Ansteuersignale S₁ und S₂. Fig. 2 zeigt weiterhin das Ansteuersignal S_{K} für die Schalttransistoren T3 und T4, also den Kurzschluss der Kurzschlusswicklung. Dieser Kurzschluss erfolgt nach Einprägung eines Spannungspulses von der ersten Wicklung W1 in die dritte Wicklung W3 und damit den Lampenkreis gemäß dem Flusswandlerprinzip.

Fig. 3 zeigt anhand tatsächlicher Messkurven die wesentlichen elektrischen Vorgänge.

Unten eingezeichnet ist der Strom durch die Kurzschlussschalter T3 und T4, der hier mit I_{T3} bezeichnet ist. Dieser Strom I_{T3} zeigt unmittelbar nach dem Kurzschluss einen deutlichen Puls, der dann abklingt. Die nach Öffnen des Kurzschlussschalters auftretenden Schwingungen spielen keine Rolle.

Darüber wiederum erkennt man die an der Entladungslampe L anliegende Lampenspannung U_{L} und oben wiederum den Strom I_{L} durch die Entladungslampe L. Bezug nehmend auf den linken Bereich der Fig. 3, erkennt man zunächst einen ausgeprägten, steil einsetzenden und positiven Ausschlag der Lampenspannung U_{L}. Dabei handelt es sich um den in Folge eines Einschaltvorgangs des Schalttransistors T1 einsetzenden Flusswandlerpuls. Dieser erzeugt die dargestellte Lampenspannung, die mit einer Zündung und einem entsprechenden Ausschlag im Lampenstrom I_{L} verbunden ist. Man erkennt ferner, dass mit dem Abklingen der Lampenspannung U_{L} hier kein wesentlicher in der Polarität entgegengesetzter Lampenstrompuls auftritt, der einer spontanen Rückzündung nach einem teilweisen Abfließen der äußeren Ladung an der Entladungslampe L und damit entsprechendem Feld in Folge der inneren Polarisation nach dem ersten Zündvorgang zuzuschreiben wäre. Ein solcher Puls wäre aber durchaus möglich.

Im weiteren Zeitverlauf schwingt der Lampenkreis über, so dass eine negative Lampenspannung U_{L} auftritt. Würde man diesen Schwingvorgang weiterlaufen lassen, würden relativ große Zeitintegrale der Spannung und damit Magnetisierungen in dem Transformator auftreten. Gerade dielektrisch behinderte Entladungslampen haben nämlich einen erheblichen kapazitiven Lastanteil, insbesondere wenn es sich um größere Lampen handelt. Neben der Kapazität des Entladungsgefäßes und der dielektrischen Barriere zählen hierzu auch Kopplungen an die Umgebung. Stattdessen wird jedoch mit dem in Fig. 2 erkennbaren S_{K}-Puls ein Kurzschluss in dem Transformator hergestellt, der sich in dem Puls des Stroms I_{T3} zeigt. Gleichzeitig fällt die Lampenspannung U_{L} sehr schnell ab, weil sich die Eigenfrequenz des Lampenkreises drastisch erhöht hat. Dieses erneute schnelle Abfließen von Ladungen von der Entladungslampe L führt, wie die Kurve I_{L} zeigt, zu einer weiteren Zündung. Außerdem folgen daraufhin wesentlich kleinere Zeitintegrale der Lampenspannung U_{L} und damit der Spannung an der dritten Wicklung W3 mehr. Durch den Kurzschlussschalter kann man die Kernmagnetisierung also wesentlich begrenzen.

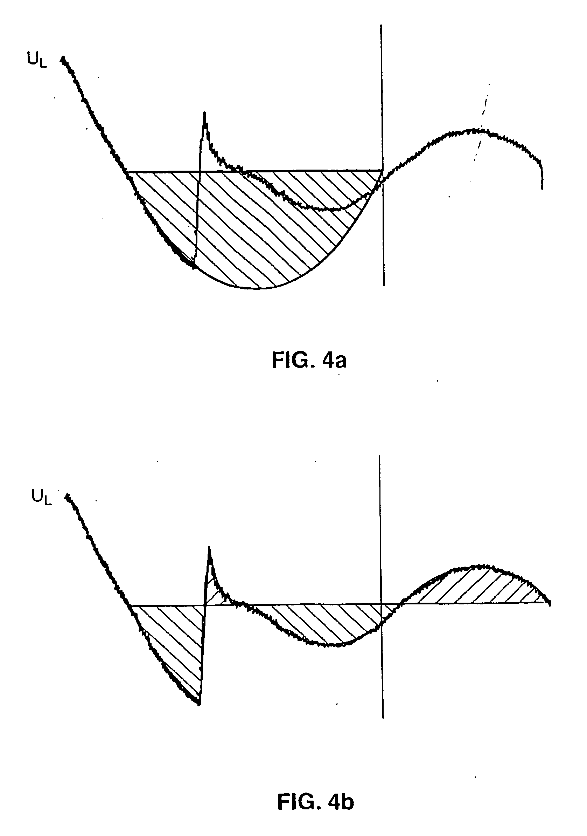

Die Fig. 4a und 4b zeigen entsprechende Ausschnitte aus der Lampenspannungskurve aus Fig. 3, wobei in Fig. 4a ein Integral eines ohne Kurzschlussschalter ablaufenden Schwingvorgangs der Lampenspannung angedeutet ist, während Fig. 4b die in Fig. 3 tatsächliche auftretenden Integrale zeigt. Man erkennt, dass sich ohne Kurzschlussschalter ein erheblich größeres Spannungszeitintegral aufbaut. Im unteren Teil wird der Aufbau dieses Integrals durch Einsatz des Kurzschlussschalters wesentlich begrenzt (schätzungsweise etwa auf ¹/₅), woraufhin durch das kurze spitze Integral mit entgegengesetzter Polarität bereits ein Abbau der Kernmagnetisierung erfolgt. Das darauf folgende flachere Integral addiert sich zwar hinzu, führt jedoch an seinem Ende in der Summe zu einem deutlich geringeren Gesamtwert als in Fig. 4a. Das darauf folgende letzte vorzeicheninvertierte Integral in Fig. 4b führt wiederum zu einem Abbau der Kernmagnetisierung.

Diese beiden rechten flachen Integrale entsprechen einer Restschwingung der Spannung des Lampenkreises, die wegen ihrer im Vergleich zu der vorherigen, in Fig. 4a dargestellten Schwingung deutlich kleineren Amplitude aber keine wesentlichen Nachteile mehr mit sich bringt.

Nach Ablauf der für das Pulsverfahren typischen Totzeit wiederholen sich die entsprechenden Vorgänge. Es wurde bereits darauf hingewiesen, dass der zeitliche Abstand zwischen den Zündungen (die beide letztlich auf denselben Flusswandlerpuls zurückgehen) durch die Triggerung des zweiten Zündvorgangs, also die zeitliche Lage des S_{K}-Signals, einstellbar ist. Im vorliegenden Fall werden die Zündungen tatsächlich als zwei Leistungseinkopplungspulse betrachtet, die voneinander durch eine Totzeit getrennt sind. Die Erfindung wäre jedoch auch mit viel kleineren zeitlichen Abständen zwischen den Zündungen ausführbar, die dann nicht als Totzeit zu werten wären.

Im Vergleich der Fig. 2 und 3 erkennt man, dass der erste Schalter ungefähr im Nulldurchgang der Restschwingung der Lampenspannung U_{L} eingeschaltet wird und ungefähr im Nulldurchgang nach dem Umschwingen des Stroms I_{T1+T2} wieder geöffnet wird. Der Kurzschlussschalter wiederum wird in diesem Beispiel im Maximum der Lampenspannung U_{L} nach dem Umschwingen im Lampenkreis geschlossen (d. h. die Transistoren T3 und T4) und ungefähr im Nulldurchgang ihres Stroms wieder geöffnet. Diese Schaltzeitpunkte sind jedoch nicht essentiell. Zu der Lampenstromkurve muss noch angemerkt werden, dass die in Fig. 3 dargestellte Messung aus messtechnischen Gründen etwas in Stromrichtung gegenüber der horizontalen Achse verschoben ist, was sich an dem Vergleich der analogen Strukturen umgekehrter Polarität ablesen lässt. Tatsächlich werden die Transistoren T3 und T4 etwa im Nullpunkt des Stroms I_{L} geschlossen. Der Lampenstrom I_{L} hat nach dem "Hinzündungspuls" bis zu diesem Zeitpunkt eine relativ schwache Halbschwingung ausgeführt.

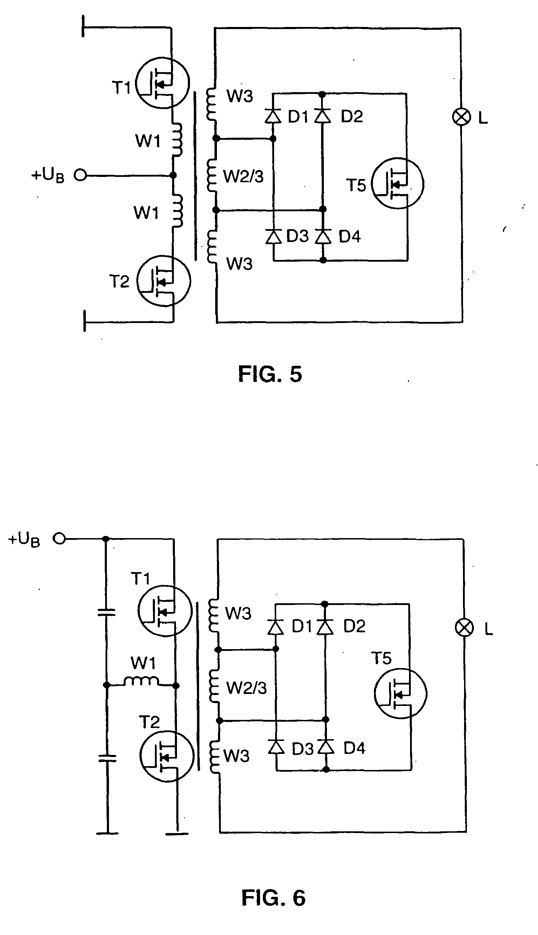

Das Ausführungsbeispiel könnte auch in Form eines Eintaktwandlers oder einer Halbbrücke realisiert sein an Stelle des hier in Fig. 1 dargestellten Gegentaktwandlers. Ferner könnte statt der beiden Schalttransistoren T3 und T4 auch ein einzelner Kurzschlussschalter T5 verwendet werden, der beispielsweise über eine Diodenbrücke D1 - D4 an die Kurzschlusswicklung angeschlossen ist. Fig. 5 zeigt schematisch ein Beispiel für einen Gegentaktwandler mit einer Diodenbrücke D1 - D4 und Fig. 6 ein Beispiel für eine Halbbrücke mit einer Diodenbrücke D1 - D4. Die Ansteuerleitungen sind der Einfachheit halber weggelassen.

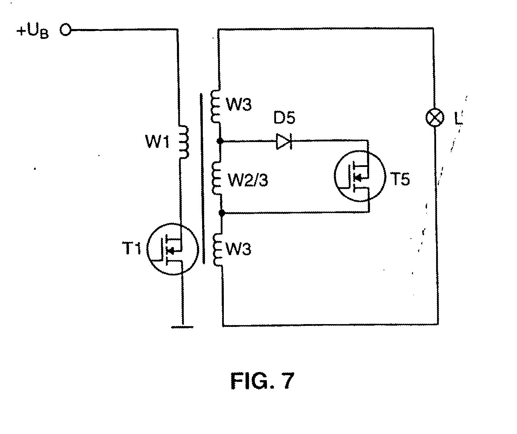

Ferner zeigt Fig. 7 ein Beispiel für einen Eintaktwandler mit einer einzelnen Entkoppeldiode D5 zum Anschluss des Kurzschlussschalters T5. Diese Diode D5 ist entgegengesetzt zu der parasitären Transistordiode des Kurzschlussschalters T5 gepolt, so dass unbeabsichtigte Kurzschlüsse vermieden werden können. Über die Diodenbrücken können darüber hinaus Umschwingvorgänge auch mit negativen Stromanteilen gezielt gesteuert werden. Wegen der übersetzungsbedingt kleinen Ströme durch die Dioden D5 bleiben die Verluste darin gering.

Um die Spitzenströme in den primärseitigen Schaltern T1 und T2 zu begrenzen, kann die magnetische Kopplung der ersten Wicklung W1 gezielt schwach ausgeführt werden, etwa durch einen geeigneten Kammeraufbau. Dies betrifft nicht die magnetische Kopplung zwischen der Kurzschlusswicklung W2 und dem Lampenabgriff.

Die Beispiele aus den Fig. 5, 6 und 7 zeigen ferner, dass die Kurzschlusswicklung W2 Teil der sekundärkreisseitigen Wicklung W3 sein kann. Insbesondere ist dabei die Größe der an dem Kurzschlussschalter T5 auftretenden Spannungen einstellbar, wobei ein Bereich zwischen 600 - 800 V bevorzugt ist.

Die Aussteuerungen des Transformatorkerns bleiben bei diesen Beispielen deutlich unter 100 mT, was erfindungsgemäß bevorzugt ist.

Der Grundgedanke der Erfindung ist auch auf andere Fälle anwendbar, in denen eine Lampe, insbesondere eine Lampe mit einer kapazitiven Charakteristik, betrieben werden soll. Die erfindungsgemäße Kurzschlussphase kann verschiedene Vorteile haben, wobei im Einzelfall auch andere Aspekte als die Begrenzung der Magnetisierung der Induktivität im Vordergrund stehen können. Insbesondere betrifft dies die zeitliche Steuerung des Betriebs, im Ausführungsbeispiel etwa die zeitliche Steuerung der auf den Kurzschluss folgenden Zündung.

Ein wichtiger Vorteil der Erfindung besteht zudem darin, dass durch die Taktung der Ansteuersignale S₁ und S₂ und insbesondere S_{K} eine individuelle Anpassung des elektronischen Vorschaltgeräts auf verschiedene Typen von Entladungslampen L vorgenommen werden kann. Diese Anpassung kann also ohne Hardwareanpassungen rein softwaretechnisch erfolgen.

## Patentansprüche

1. Elektronisches Vorschaltgerät für eine Lampe (L) mit einer Induktivität (W1, W2, W3) zur Erzeugung von iterativen Spannungspulsen (U_{L}) in einem die Lampe (L) enthaltenden Lampenkreis,
welche Induktivität (W1, W2, W3) eine von einer Spannungsquelle (U_{B}) mit Strom beaufschlagbare erste Wicklung (W1) aufweist,
**gekennzeichnet durch** eine über einen steuerbaren Kurzschlussschalter (T3, T4, T5) niederohmig kurzschließbare zweite Wicklung (W2) zur Erzeugung einer Betriebsphase des Vorschaltgeräts, in der die zweite Wicklung (W2) niederohmig über den zur zweiten Wicklung parallel geschalteten Kurzschlussschalter kurzgeschlossen ist.

2. Vorschaltgerät nach Anspruch 1, das für eine für dielektrisch behinderte Entladungen ausgelegte Entladungslampe (L) vorgesehen ist und bei dem nach der durch den Spannungspuls (U_{L}) erfolgten Zündung die zweite Wicklung (W2) kurzgeschlossen wird, um die Lampe (L) von der durch den Spannungspuls (U_{L}) hervorgerufenen kapazitiven Aufladung zu entladen.

3. Vorschaltgerät nach einem der vorstehenden Ansprüche, bei dem die Induktivität (W1, W2, W3) ein Transformator, vorzugsweise ein Trenntransformator ist.

4. Vorschaltgerät nach einem der vorstehenden Ansprüche, welches zur Erzeugung der Spannungspulse (U_{L}) als Flusswandler ausgelegt ist.

5. Vorschaltgerät nach einem der vorstehenden Ansprüche, bei dem ein die Einprägung der Spannungspulse (U_{L}) steuernder erster Schalter (T1, T2) etwa im Nulldurchgang der Lampenspannung (U_{L}) eingeschaltet wird.

6. Vorschaltgerät nach einem der vorstehenden Ansprüche, bei dem ein die Einprägung der Spannungspulse (U_{L}) steuernder erster Schalter (T1, T2) etwa bei Stromnulldurchgang geöffnet wird.

7. Vorschaltgerät nach einem der vorstehenden Ansprüche, bei dem der Kurzschlussschalter (T3, T4, T5) etwa beim Spannungsmaximum im Lampenkreis geschlossen wird.

8. Vorschaltgerät nach einem der vorstehenden Ansprüche, bei dem es nach der durch das Einprägen des Spannungspulses (U_{L})herbeigeführten Zündung vor dem Einprägen des nächsten Spannungspulses (U_{L}) über die Induktivität (W1, W2, W3) zu einer Rückzündung in der Lampe (L) kommt.

9. Vorschaltgerät nach Anspruch 8, bei dem der Kurzschlussschalter (T3, T4, T5) nach der Rückzündung geöffnet wird.

10. Vorschaltgerät nach einem der vorstehenden Ansprüche, bei dem der Kurzschlussschalter (T5) über eine Diode (D5) parallel zu der zweiten Wicklung (W2) geschaltet ist, welche Diode (D5) zu einer parasitären Transistordiode des Kurzschlussschalters (T5) entgegengesetzt gepolt ist.

11. Vorschaltgerät nach einem der Ansprüche 1 - 9, bei dem der Kurzschlussschalter (T5) über eine Diodenbrücke (D1 - D4) parallel zu der zweiten Wicklung (W2) geschaltet ist.

12. Vorschaltgerät nach einem der Ansprüche 1 - 9, bei dem die zweite Wicklung (W2) über einen jeweiligen Schalter (T3, T4) an beiden ihrer Anschlüsse über ein Bezugspotential kurzgeschlossen werden kann.

13. Vorschaltgerät nach einem der vorstehenden Ansprüche, bei dem die zweite Wicklung (W2) so ausgelegt ist, dass an dem Kurzschlussschalter (T5) maximale Sperrspannungen im Bereich von 500 - 800 V auftreten.

14. Vorschaltgerät nach einem der vorstehenden Ansprüche, bei dem die Aussteuerung eines Kerns der Induktivität (W1, W2, W3) unterhalb von 100 mT bleibt.

15. Vorschaltgerät nach einem der vorstehenden Ansprüche, das zur Erzeugung von Spannungspulsen (U_{L}) alternierender Polarität ausgelegt ist.

16. Vorschaltgerät nach einem der vorstehenden Ansprüche, das einen Mikrocontroller (1) zur Steuerung des Kurzschlussschalters (T3, T4, T5) aufweist.

17. Vorschaltgerät nach Anspruch 16, bei dem ferner ein die Einprägung der Spannungspulse (U_{L}) steuernder erster Schalter (T1, T2) von dem Mikrocontroller (1) gesteuert ist.

18. Verfahren zum Auslegen eines Vorschaltgeräts nach Anspruch 17 auf einen bestimmten Lampentyp (L), bei dem lediglich die Software des Mikrocontrollers (1) angepasst wird.

19. Beleuchtungssystem aus einem Vorschaltgerät nach einem der Ansprüche 1 - 17 und einer für dielektrisch behinderte Entladungen ausgelegten Entladungslampe (L).

20. Beleuchtungssystem nach Anspruch 19, bei dem sich aus der Streuinduktivität der Induktivität (W1, W2, W3) und der Lampenkapazität der Entladungslampe (L) eine Periodendauer zwischen 0,4 µs und 10 µs ergibt.

## Claims

1. Electronic ballast for a lamp (L) having an inductor (W1, W2, W3) for generating iterative voltage pulses (U_{L}) in a lamp circuit including the lamp (L), which induct (W1, W2, W3) has a first winding (W1) to which current can be applied by a voltage source (U_{B}), **characterized by** a second winding (W2), which can be short-circuited at low resistance via a controllable short-circuiting switch (T3, T4, T5), for the purpose of generating an operating phase of the ballast in which the second winding (W2) is short-circuited at low resistance via the short-circuiting switch connected in parallel with the second winding.

2. Ballast according to claim 1, which is provided for a discharge lamp (L) designed for dielectrically impeded discharges, and in the case of which ballast the second winding (W2) is short-circuited after the ignition performed by the voltage pulse (U_{L}), in order to discharge from the lamp (L) the capacitive charge caused by the voltage pulse (U_{L}).

3. Ballast according to one of the preceding claims, in which the inductor (W1, W2, W3) is a transformer, preferably an isolating transformer.

4. Ballast according to one of the preceding claims, which is designed as a forward transformer in order to generate the voltage pulses (U_{L}).

5. Ballast according to one of the preceding claims, in which a first switch (T1, T2) controlling the injection of the voltage pulses (U_{L}) is switched on approximately at the zero crossing of the lamp voltage (U_{L}).

6. Ballast according to one of the preceding claims, in which a first switch (T1, T2) controlling the injection of the voltage pulses (U_{L}) is opened approximately at the current zero crossing.

7. Ballast according to one of the preceding claims, in which the short-circuiting switch (T3, T4, T5) is closed approximately at the voltage maximum in the lamp circuit.

8. Ballast according to one of the preceding claims, in which, the after the ignition caused by the injection of a voltage pulse (U_{L}) via the inductor (W1, W2, W3) before the injection of the next voltage pulse (U_{L}), there is a back ignition in the lamp [L].

9. Ballast according to claim 8, in which the short-circuiting switch (T3, T4, T5) is opened after the back ignition.

10. Ballast according to one of the preceding claims, in which the short-circuiting switch (T5) is switched parallel to the second winding (W2) via a diode (D5) that is polarized opposite to a parasitic transistor diode of the short-circuiting switch (T5).

11. Ballast according to one of claims 1-9, in which the short-circuiting switch (T5) is connected in parallel with the second winding (W2) via a diode bridge (D1-D4).

12. Ballast according to one of claims 1-9, in which it is possible via a respective switch (T3, T4) for the second winding (W2) to be short-circuited at both its connections via a reference potential.

13. Ballast according to one of the preceding claims, in which the second winding (W2) is designed such that maximum reverse voltages in the range of 500 - 800 V occur at the short-circuiting switch (T5).

14. Ballast according to one of the preceding claims, in which the saturation of a core of the inductor (W1, W2, W3) remains below 100 mT.

15. Ballast according to one of the preceding claims, which is designed for generating voltage pulses (U_{L}) of alternating polarity.

16. Ballast according to one of the preceding claims, which has a microcontroller (1) for controlling the short-circuiting switch (T3, T4, T5).

17. Ballast according to claim 16, in which, furthermore, a first switch (T1, T2) controlling the injection of the voltage pulses (U_{L}) is controlled by the microcontroller (1).

18. Method for designing a ballast according to claim 17 for a specific lamp type (L), in which only the software of the microcontroller (1) is adapted.

19. Illuminating system comprising a ballast according to one of claims 1-17 and a discharge lamp (L) designed for dielectrically impeded discharges.

20. Illuminating system according to claim 19, in which a period of between 0.4 µs and 10 µs results from the leakage inductance of the inductor (W1, W2, W3) and the lamp capacitance of the discharge lamp (L).

## Revendications

1. Ballast électronique pour une lampe (L) ayant une inductance (W1, W2, W3) pour la production d'impulsions de tension itératives (U_{L}) dans un circuit de lampe contenant la lampe (L),
laquelle inductance (W1, W2, W3) comporte un premier enroulement (W1) pouvant être alimenté en courant par une source de tension (U_{B}),
**caractérisé par** un deuxième enroulement (W2) pouvant être court-circuité à basse impédance par l'intermédiaire d'un interrupteur à court-circuit commandable (T3, T4, T5) pour la production d'une phase de fonctionnement du ballast dans laquelle le deuxième enroulement (W2) est court-circuité à basse impédance par l'intermédiaire de l'interrupteur à court-circuit branché en parallèle avec le deuxième enroulement.

2. Ballast selon la revendication 1, qui est prévu pour une lampe à décharge (L) conçue pour des décharges à barrière diélectrique et tel que, après l'amorçage effectué par l'impulsion de tension (U_{L}), le deuxième enroulement (W2) est court-circuité pour décharger la lampe (L) de la charge capacitive due à l'impulsion de tension (U_{L}).

3. Ballast selon l'une des revendications précédentes, tel que l'inductance (W1, W2, W3) est un
transformateur, de préférence un transformateur séparateur.

4. Ballast selon l'une des revendications précédentes, qui est conçu comme un convertisseur de flux pour la production des impulsions de tension (U_{L}).

5. Ballast selon l'une des revendications précédentes, tel qu'un premier interrupteur (T1, T2) commandant l'application des impulsions de tension (U_{L}) est connecté sensiblement lors du passage par zéro de la tension de lampe (U_{L}).

6. Ballast selon l'une des revendications précédentes, tel qu'un premier interrupteur (T1, T2) commandant l'application des impulsions de tension (U_{L}) est ouvert sensiblement lors du passage par zéro du courant.

7. Ballast selon l'une des revendications précédentes, tel que l'interrupteur à court-circuit (T3, T4, T5) est fermé sensiblement lors du maximum de tension dans le circuit de lampe.

8. Ballast selon l'une des revendications précédentes, tel que, après l'amorçage dû à l'application de l'impulsion de tension (U_{L}) et avant l'application de la prochaine impulsion de tension (U_{L}), il se produit par l'intermédiaire de l'inductance (W1, W2, W3) un amorçage inverse dans la lampe (L).

9. Ballast selon la revendication 8, tel que l'interrupteur à court-circuit (T3, T4, T5) est ouvert après l'amorçage inverse.

10. Ballast selon l'une des revendications précédentes, tel que l'interrupteur à court-circuit (T5) est branché par l'intermédiaire d'une diode (D5) en parallèle avec le deuxième enroulement (W2), laquelle diode (D5) est polarisée en sens contraire d'une diode de transistor parasitaire de l'interrupteur à court-circuit (T5).

11. Ballast selon l'une des revendications 1 à 9, tel que l'interrupteur à court-circuit (T5) est branché par l'intermédiaire d'un pont de diodes (D1 à D4) en parallèle avec le deuxième enroulement (W2).

12. Ballast selon l'une des revendications 1 à 9, tel que le deuxième enroulement (W2) peut être court-circuité par un interrupteur respectif (T3, T4) à ses deux bornes par l'intermédiaire d'un potentiel de référence.

13. Ballast selon l'une des revendications précédentes, tel que le deuxième enroulement (W2) est conçu de telle sorte que des tensions de blocage maximales de l'ordre de 500 à 800 V apparaissent sur l'interrupteur à court-circuit (T5).

14. Ballast selon l'une des revendications précédentes, tel que le réglage maximal d'un noyau de l'inductance (W1, W2, W3) reste au-dessous de 100 mT.

15. Ballast selon l'une des revendications précédentes, qui est conçu pour la production d'impulsions de tension (U_{L}) de polarité alternée.

16. Ballast selon l'une des revendications précédentes, qui comporte un microcontrôleur (1) pour la commande de l'interrupteur à court-circuit (T3, T4, T5).

17. Ballast selon la revendication 16, tel que, en plus, un premier interrupteur (T1, T2) commandant l'application des impulsions de tension (U_{L}) est commandé par le microcontrôleur (1).

18. Procédé pour la conception d'un ballast selon la revendication 17 sur un certain type de lampe (L), dans lequel on adapte simplement le logiciel du microcontrôleur (1).

19. Système d'éclairage constitué d'un ballast selon l'une des revendications 1 à 17 et d'une lampe à décharge (L) conçue pour des décharges à barrière diélectrique.

20. Système d'éclairage selon la revendication 19, dans lequel il résulte d'une inductance de fuite de l'inductance (W1, W2, W3) et de la capacité de la lampe à décharge (L) une durée de période comprise entre 0,4 µs et 10 µs.
